# EUROPEAN PATENT APPLICATION

(11) **EP 2 482 395 A1**
(43) Date of publication of application: **01.08.2012**
(21) Application number: 10818550.5
(22) Date of filing: 22.09.2010
(51) Int. Cl.: H01T 13/20

(54) **SPARK PLUG**

(30) Priority: 25.09.2009 JP 2009220422; 21.09.2010 JP 2010210316
(71) Applicant: NGK Spark Plug Co., Ltd., Nagoya-shi Aichi 467-8525 (JP)
(72) Inventor: YOSHIDA, Haruki, Nagoya-shi Aichi 467-8525 (JP); HONDA, Toshitaka, Nagoya-shi Aichi 467-8525 (JP)
(74) Representative: Grünecker, Kinkeldey, Stockmair & Schwanhäusser
(86) International application number: PCT/JP2010/005731
(87) International publication number: WO 2011/036871

(57) **Abstract**

To provide a spark plug which exhibits excellent load life performance even when the resistor thereof has been thermally compacted at slightly varied heating temperatures. A spark plug 1 includes an insulator 2 having an axial hole 4 extending therethrough along the axis direction CL1; a center electrode 5 inserted into a front end portion of the axial hole 4; a terminal electrode 6 inserted into a rear end portion of the axial hole 4; a resistor 7 disposed in the axial hole 4 to be located between the center electrode 5 and the terminal electrode 6 and containing at least an electrically conductive material and glass. The resistor 7 contains SiO₂ in an amount of 15.0 mass% or more, B₂O₃ in an amount of 17.8 mass% to 44.8 mass%, Li₂O in an amount of 1.2 mass% to 6.3 mass%, and BaO in an amount of 3.5 mass% to 19.9 mass%; and has a ratio by mass of the amount of B₂O₃ to the total amount of Li₂O and BaO of 1.43 or higher, and a ratio by mass of the amount of Li₂O to that of BaO of 0.22 or higher.

## Description

### TECHNICAL FIELD

The present invention relates to a spark plug used in, for example, an internal combustion engine.

### BACKGROUND ART

A spark plug is employed in a combustion apparatus (e.g., an internal combustion engine) for ignition of a fuel-air mixture in a chamber of the apparatus. Typically, a spark plug includes an insulator having an axial hole, a center electrode inserted into a front end portion of the axial hole, a terminal electrode inserted into a rear end portion of the axial hole, and a metallic shell provided on the outer circumference of the insulator. In the axial hole, a resistor is disposed between the center electrode and the terminal electrode, for suppressing radio wave noise generated during operation of the combustion apparatus (see, for example, Patent Document 1).

Conventionally, a resistor is formed by compacting with heat of a resistor composition predominantly containing glass, an electrically conductive material such as carbon black, and ceramic particles (e.g., glass powder). The thus-thermally-formed resistor assumes a separated phase structure in which a particulated aggregate glass phase is surrounded by a molten glass phase, and the molten glass phase contains an electrically conductive material and ceramic particles. Thus, the center electrode and the terminal electrode are electrically connected via electrical conduction paths formed of an electrically conductive material contained in the molten glass phase.

### PRIOR ART DOCUMENT

### PATENT DOCUMENT

Patent Document 1: Japanese Patent No. 2800279

### SUMMARY OF THE INVENTION

### PROBLEM TO BE SOLVED BY THE INVENTION

Meanwhile, in order to enhance load life performance, a large number of electrical conduction paths which establish electrical connection between the two electrodes are preferably provided in the resistor. Through formation of a large number of electrical conduction paths, even when some of these electrical conduction paths have been impaired through heat generation of the electrical conduction paths attributed to electrical load, oxidation concomitant with heat generation, etc., a sudden rise in electrical resistance of the resistor can be effectively prevented. For forming a large number of electrical conduction paths in the resistor, the composition of the glass forming the resistor composition or other factors are modified.

In the case where the resistor composition is heated at a target temperature, a large number of electrical conduction paths can be formed. However, when the heating temperature is slightly varied, a sufficient number of electrical conduction paths cannot be formed, in some cases, failing to ensure a target level of load life performance. Also, through variation of heating temperature, the density of the resistor decreases, and the resistor may be susceptible to oxidation. In other words, through slight variation in heating temperature, the formed resistor may exhibit considerably varied load life performance.

The present invention has been achieved in view of the above circumstances, and an object of the invention is to provide a spark plug which exhibits excellent load life performance even when the resistor thereof has been thermally compacted at slightly varied heating temperatures.

### MEANS FOR SOLVING THE PROBLEMS

Configurations suited for achieving the above-mentioned object will next be described individually. If necessary, actions and effects peculiar to individual configurations will be described additionally.

Configuration 1: A spark plug comprising:
an insulator having an axial hole extending therethrough along an axis direction, a center electrode inserted into a front end portion of the axial hole, a terminal electrode inserted into a rear end portion of the axial hole, and a resistor disposed in the axial hole to be located between the center electrode and the terminal electrode and containing at least an electrically conductive material and glass,
characterized in that the resistor contains silicon dioxide (SiO₂) in an amount of 15.0 mass% or more, boron oxide (B₂O₃) in an amount of 17.8 mass% to 44.8 mass%, lithium oxide (Li₂O) in an amount of 1.2 mass% to 6.3 mass%, and barium oxide (BaO) in an amount of 3.5 mass% to 19.9 mass%; and has a ratio by mass of the amount of boron oxide (B₂O₃) to the total amount of lithium oxide (Li₂O) and barium oxide (BaO) of 1.43 or higher, and a ratio by mass of the amount of lithium oxide (Li₂O) to that of barium oxide (BaO) of 0.22 or higher.

The B₂O₃ content is adjusted to 44.8 mass% or lower, the Li₂O content is adjusted to 6.3 mass% or lower, and the BaO content is adjusted to 19.9 mass% or lower. B₂O₃ is readily melted at comparatively low temperature, and Li₂O and BaO promote melting of glass. Thus, when the amounts of B₂O₃, Li₂O, etc. are adjusted to a predetermined level or lower, excessive melting of glass is prevented, even in the case where the heating temperature is shifted toward higher temperature. In this case, the density of the resistor can be enhanced to a sufficient level, and oxidation of the resistor during passage of electricity can be suppressed. Meanwhile, when glass is melted excessively, to thereby considerably decrease the viscosity of the glass, the electrically conductive material does not disperse but is aggregated. In this case, the amount of heat generated from the resistor during passage of electricity may increase. However, through prevention of the aforementioned excessive melting of glass, such heat generation can be reliably prevented. As a result, a large number of electrical conduction paths can be formed in the molten glass phase, leading to enhancement in load life performance.

Regarding Li₂O and BaO, which are ingredients promoting melting of glass, the Li₂O content is adjusted to 1.2 mass% or higher, and the BaO content is adjusted to 3.5 mass% or higher. Thus, even when the heating temperature is shifted toward slightly lower temperature, glass can be sufficiently melted, to thereby form a large number of conduction paths in the molten glass phase.

The present inventors have further studied on the properties of BaO and Li₂O, and have found that both BaO and Li₂O can disperse the aggregate glass phase in the resistor (i.e., promotes separation of the glass phase) and that the action of Li₂O is stronger than that of BaO. Based on these findings, the ratio by mass of the amount of lithium oxide (Li₂O) to that of barium oxide (BaO) (Li₂O/BaO) is adjusted to 0.22 or higher in the above-described onfiguration 1. In other words, the Li₂O content is adjusted to a sufficiently high level, and Li₂O, which has a stronger action, serves as an effective ingredient. Therefore, the aggregate glass phase can be finely dispersed in a wide heating temperature range and, furthermore, the molten glass phase (electrical conduction paths) can be finely branched.

Configuration 2: A spark plug according to the present configuration is characterized in that, in the above-mentioned configuration 1, the resistor contains B₂O₃ in an amount of 20.4 mass% to 44.8 mass%, Li₂O in an amount of 2.5 mass% to 6.3 mass%, and BaO in an amount of 3.5 mass% to 14.6 mass%.

Configuration 3: A spark plug according to the present configuration is characterized in that, in the above-mentioned configuration 1 or 2, the ratio by mass of the amount of Li₂O to that of BaO is adjusted to 0.25 or higher.

Configuration 4: A spark plug according to the present configuration is characterized in that, in any of the above-mentioned configurations 1 to 3, the resistor has a diameter of 2.9 mm or less.

Notably, in the case where the width (thickness) of the resistor varies along the axis direction, the term "diameter of the resistor" refers to the diameter at the thinnest portion of the resistor.

According a recent demand for downsizing of a spark plug (reduction in diameter), the diameter of the axial hole and that of the resistor disposed in the axial hole may be reduced. However, when the diameter of the resistor is reduced, the electrical load per unit area in the resistor increases. Therefore, a resistor of a small diameter encounters difficulty in attaining sufficient load life performance.

Configuration 5: A spark plug according to the present configuration is characterized in that, in any of the above-mentioned configurations 1 to 4, the resistor has a glass content by mass of 70 mass% or higher.

### EFFECTS OF THE INVENTION

According to the spark plug of the above-described configuration 1, the B₂O₃ content is adjusted to 17.8 mass% or higher. Therefore, even when the heating temperature is slightly low, glass melts sufficiently, and a large number of paths connecting the two electrodes (i.e., electrical conduction paths) can be provided in the molten glass phase.

In addition, the ratio by mass of the amount of B₂O₃ to the total amount of Li₂O and BaO (B₂O₃/(Li₂O+BaO)) is adjusted to 1.43 or higher. Specifically, the amount of B₂O₃, which facilitates melting of glass, is sufficiently high with respect to the total amount of Li₂O and BaO. Therefore, even when the heating temperature is slightly shifted toward higher temperature, excessive melting of glass can be prevented, whereby prevention of a drop in density and aggregation of electrically conductive material in the resistor can be further ensured.

As described above, according to the spark plug of the configuration 1, through adjusting the content of each substance to fall within the corresponding range, a large number of electrical conduction paths can be formed in a wide heating temperature range, and the density of the resistor can be effectively increased. As a result, even when the resistor has been formed through compacting with heating at a slightly varied temperature, the spark plug produced therefrom attains excellent load life performance.

According to the spark plug of the configuration 2, the load life performance can be further enhanced.

According to the spark plug of the configuration 3, the aggregate glass phase can be further minutely dispersed in a wide heating temperature range. As a result, the molten glass phase; more specifically, the electrical conduction paths in the molten glass phase, can be further minutely branched, whereby the load life performance can be further enhanced.

The resistor of the configuration 4 has a diameter as small as 2.9 mm or less and is thought to encounter difficulty in attaining sufficient load life performance. However, through employment of the above-described configuration 1 and the like, excellent load life performance can be realized. In other words, the aforementioned configurations are advantageous particularly in the case where the resistor has a diameter of 2.9 mm or less.

According to the spark plug of the configuration 5, the resistor has a glass content by mass of 70 mass% or higher. Thus, adhesion between the resistor and the insulator surrounding the resistor is enhanced, and variation in resistance of the resistor after thermal forming can be reliably prevented.

### BRIEF DESCRIPTION OF THE DRAWINGS

[FIG. 1] Partially cutaway front view of an embodiment of the spark plug.
[FIG. 2] Enlarged schematic partial sectional view of the structure of a resistor.
[FIG. 3] Cross-sections of a ceramic insulator and other members for showing one procedure of a method of producing the spark plug of the embodiment.

### MODE FOR CARRYING OUT THE INVENTION

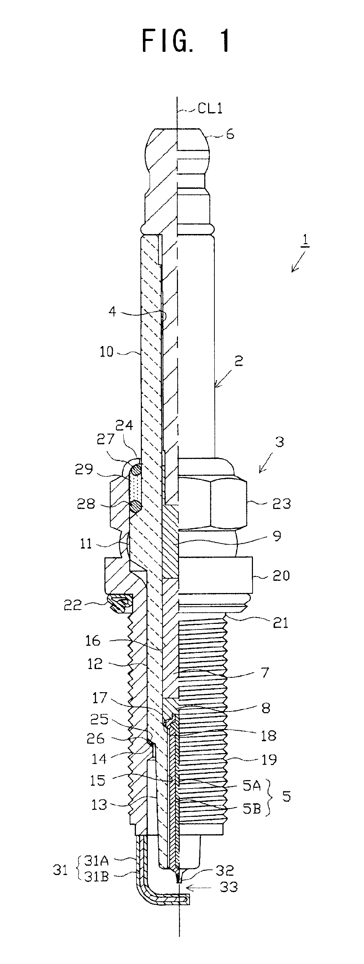

One embodiment of the present invention will next be described with reference to the drawings. FIG. 1 is a partially cutaway front view showing a spark plug 1. In the following description, the direction of an axis CL1 of the spark plug 1 in FIG. 1 is referred to as the vertical direction, and the lower side of the spark plug 1 in FIG. 1 is referred to as the front end side of the spark plug 1, and the upper side as the rear end side of the spark plug 1.

The spark plug 1 is composed of a tubular ceramic insulator 2 serving as an insulator, a tubular metallic shell 3 holding the insulator 2, etc.

The ceramic insulator 2 is formed from alumina or the like by firing, as is well known in the art. The ceramic insulator 2 externally includes a rear trunk portion 10, which is formed on the rear end side; a large-diameter portion 11, which is located on the front end side of the rear trunk portion 10 and projects radially outward; an intermediate trunk portion 12, which is located on the front end side of the large-diameter portion 11 and is smaller in diameter than the large-diameter portion 11; and a leg portion 13, which is located front end side of the intermediate trunk portion 12, is smaller in diameter than the intermediate trunk portion 12. The large-diameter portion 11, the intermediate trunk portion 12, and the greater portion of the leg portion 13 of the ceramic insulator 2 are accommodated in the metallic shell 3. A tapered portion 14 is formed at a connection portion between the intermediate trunk portion 12 and the leg portion 13 such that the diameter of the tapered portion 14 decreases frontward. The ceramic insulator 2 is seated on the metallic shell 3 via the tapered portion 14.

The ceramic insulator 2 has an axial hole 4 extending therethrough along the axis CL1. The axial hole 4 has a small-diameter portion 15 at the front end thereof, and a large-diameter portion 16 located rear end side of the small-diameter portion 15 having a diameter greater than that of the small-diameter portion 15. A tapered step portion 17 is formed between the small-diameter portion 15 and the large-diameter portion 16.

A center electrode 5 is inserted and fixed to a front end portion (the small-diameter portion 15) of the axial hole 4. Specifically, the center electrode 5 has a bulge portion 18, which is formed at the rear end thereof and bulges radially outward. The center electrode 5 is fixed in a state in which the bulge portion 18 is engaged with the step portion 17. The center electrode 5 is composed of an inner layer 5A formed of copper or a copper alloy, and an outer layer 5B formed of a nickel alloy whose main component is nickel (Ni). The center electrode 5 assumes a rod-like shape (circular columnar shape) as a whole, and its front end portion projects from the front end of the ceramic insulator 2. In addition, a noble metal tip 32 formed of a noble metal alloy (e.g., a platinum alloy or the like) is joined to the front end of the center electrode 5.

A terminal electrode 6 is inserted and fixed to a rear end portion (the large-diameter portion 16) of the axial hole 4 in a state in which it projects from the rear end of the ceramic insulator 2.

An electrically conductive resistor 7, which assumes a circular columnar shape, is disposed in the axial hole 4 to be located between the center electrode 5 and the terminal electrode 6. The resistor 7 has a resistance equal to or greater than a predetermined value (e.g., 100 Ω) in order to suppress radio wave noise. The resistor 7 is formed through a process of heating and putting into the axial hole 4 a resistor composition including an electrically conductive material, glass powder, etc. (the composition, etc. of the insulator 7 will be described later in detail). Opposite ends of the resistor 7 are electrically connected to the center electrode 5 and the terminal electrode 6 via glass seal layers 8 and 9, respectively, which are electrically conductive (for example, each have a resistance of about several hundreds mΩ).

The metallic shell 3 is formed from a metal such as low-carbon steel into a tubular shape. The metallic shell 3 has, on its outer circumferential surface, a threaded portion (externally threaded portion) 19 for attaching the spark plug 1 to an attachment hole of a combustion engine (e.g., an internal combustion engine, a fuel cell reformer, or the like). The metallic shell 3 has a seat portion 20 formed on its outer circumferential surface and located on the rear end side of the threaded portion 19. A ring-like gasket 22 is fitted to a screw neck 21 located at the rear end of the threaded portion 19. The metallic shell 3 also has a tool engagement portion 23 provided near its rear end. The tool engagement portion 23 has a hexagonal cross section and allows a tool such as a wrench to be engaged therewith when the metallic shell 3 is to be attached to the combustion apparatus. Further, the metallic shell 3 has a crimp portion 24 provided at its rear end portion and adapted to hold the ceramic insulator 2.

The metallic shell 3 has a tapered step portion 25 provided on its inner circumferential surface at the front end side thereof, and adapted to allow the ceramic insulator 2 to be seated thereon. The ceramic insulator 2 is inserted into the metallic shell 3 from the rear end side of the metallic shell 3 toward the front end side thereof. In a state in which the tapered portion 14 of the ceramic insulator 2 is engaged with the step portion 25 of the metallic shell 3, a rear end opening portion of the metallic shell 3 is crimped radially inward; i.e., the above-mentioned crimp portion 24 is formed, whereby the ceramic insulator 2 is fixed to the metallic shell 3. Notably, an annular sheet packing 26 is disposed between the tapered portions 14 and the steep portion 25. This retains gas-tightness of the combustion chamber and prevents leakage, to the outside, of a fuel gas which enters a clearance between the inner circumferential surface of the metallic shell 3 and the leg portion 13 of the ceramic insulator 2, which leg portion 13 is exposed to the combustion chamber.

Further, in order to ensure gas-tightness which is established by crimping, annular ring members 27 and 28 are disposed between the metallic shell 3 and the ceramic insulator 2 in a region near the rear end of the metallic shell 3, and talc powder 29 is charged in the space between the ring members 27 and 28. That is, the metallic shell 3 holds the ceramic insulator 2 by the mediation of the sheet packing 26, the ring members 27 and 28, and the talc powder 29.

A ground electrode 31 is joined to the front end of the metallic shell 3. The ground electrode 31 is bent at its intermediate portion such that a side surface of its distal end portion faces a distal end portion (the noble metal tip 32) of the center electrode 5. The ground electrode 31 is composed of an outer layer 31A formed of a nickel alloy (e.g., Inconel 600 or Inconel 601 (registered trademark)), and an inner layer 31B formed of a metal, such as copper or copper alloy, which is higher in heat conductivity than the above-mentioned nickel alloy.

A spark discharge gap 33 is formed between the front end surface of the noble-metal tip 32 and the distal end portion of the ground electrode 31, whereby spark discharge occurs in the spark discharge gap 33 generally along the axis CL1.

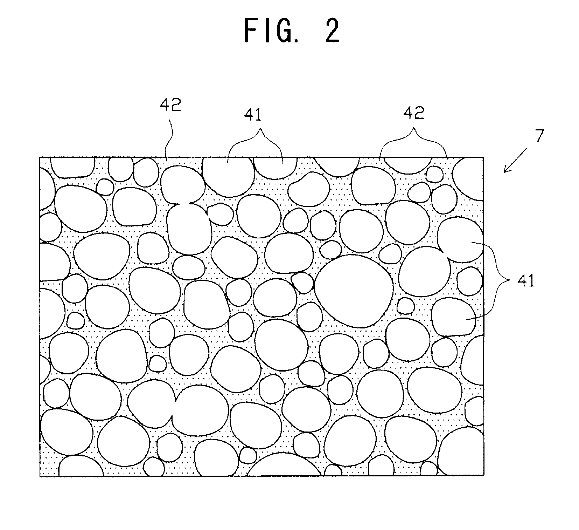

Next, the resistor 7 will be described in detail. As described above, the resistor 7 is formed through heating and charging, into the axial hole, a resistor composition containing an electrically conductive material and a glass powder, and thus contains the electrically conductive material and the glass. As shown in FIG. 2 (FIG. 2 is an enlarged schematic partial sectional view of the resistor 7), the resistor 7 contains an aggregate glass phase 41 which is formed of an incompletely molten glass ingredient after heating, and a molten glass phase 42 (portion represented by dots in FIG. 2) surrounding the aggregate glass phase 41. In the molten glass phase 42, carbon black serving as an electrically conductive material and ceramic particles (e.g., zirconium oxide (ZrO₂) particles and titanium oxide (TiO₂) particles) are dissolved in the glass ingredient formed through the virtually completely melting the glass powder, or carbon black is deposited on the ceramic particles and the glass portion.

Between the center electrode 5 and the terminal electrode 6, current flows via the molten glass phase 42 containing carbon black. As viewed in a cross-section of the resistor 7, the molten glass phase 42 is finely divided by the presence of the aggregate glass phase 41, to form a network-like structure. In the molten glass phase 42, electrical conduction paths formed of carbon black are finely branched by the presence of the glass ingredient and ceramic particles. That is, the electrical conduction paths present in the resistor 7 are considerably finely branched by the presence of the aggregate glass phase 41, the ceramic particles, or the like.

In the present embodiment, the resistor 7 contains boron oxide (B₂O₃) in an amount of 17.8 mass% to 44.8 mass% (more preferably 20.4 mass% to 44.8 mass%), lithium oxide (Li₂O) in an amount of 1.2 mass% to 6.3 mass% (more preferably 2.5 mass% to 6.3 mass%), and barium oxide (BaO) in an amount of 3.5 mass% to 19.9 mass% (more preferably 3.5 mass% to 14.6 mass%), with the balance being silicon dioxide (SiO₂). Notably, the aggregate glass phase 41 is rich in SiO₂, and the molten glass phase 42 is rich in B₂O₃. Therefore, in order to avoid the excessively predominant amount of the aggregate glass phase 41 or the molten glass phase 42, the SiO₂ content is preferably adjusted to 15.0 mass% or higher.

In addition, the ratio by mass of the amount of B₂O₃ to the total amount of Li₂O and BaO (B₂O₃/(Li₂O+BaO)) is adjusted to 1.43 or higher, and the ratio by mass of the amount of Li₂O to that of BaO (Li₂O/BaO) is adjusted to 0.22 or higher (more preferably 0.25 or higher).

The resistor 7 has a glass content by mass of 70 mass% or higher.

Furthermore, in the present embodiment, the spark plug 1 is downsized (diameter-reduced). Specifically, the aforementioned threaded portion 19 has a small thread pitch diameter (e.g., ≤M12 or ≤M10), and the axial hole 4 has a reduced diameter. Thus, in the present embodiment, the resistor 7 disposed in the axial hole 4 has a reduced diameter; i.e., 2.9 mm or less.

Next will be described a method for producing the spark plug 1 having the aforementioned configuration.

Firstly, the metallic shell 3 is made in advance through working. Specifically, a columnar metallic material (e.g., iron-based material (S17C or S25C) or stainless steel material) is subjected to cold forging, to thereby form a hole extending therethrough, and an unfinished metallic shell is produced. Then, the shape of the shell is finished through cutting, to thereby produce a metallic shell intermediate.

Subsequently, a ground electrode 31 made of a material such as Ni alloy is bonded through resistance welding to the front end surface of the metallic shell intermediate. Since so-called "sag" is generated in the course of resistance welding, the sag is removed, and a threaded portion 19 is formed through form rolling at a predetermined position of the metallic shell intermediate. Through this procedure, the metallic shell 3 having the ground electrode 31 bonded thereto through welding is produced. Then, the ground electrode 31-bonded metallic shell 3 undergoes zinc plating or nickel plating. In order to improve corrosion resistance, the plated metallic shell may further be subjected to a chromating process.

Besides the metallic shell 3, the ceramic insulator 2 is made in advance. Specifically, a granulated molding raw material is prepared from a raw material powder containing alumina as a predominant ingredient and a binder, and the molding raw material is subjected to rubber-press molding, to thereby form a cylindrical compact. The shape of the thus-obtained compact is finished through grinding, and the finished product is fired in a furnace, to thereby produce the ceramic insulator 2.

Also, besides the metallic shell 3 and the ceramic insulator 2, the center electrode 5 is made in advance. Specifically, an Ni alloy body including a core portion made of copper alloy or the like for facilitating heat radiation is subjected to forging, to thereby produce the center electrode 5. Then, a noble-metal tip 32 is bonded to the front end surface of the center electrode 5 through laser welding or a similar technique.

Furthermore, a powder-form resistor composition for forming the resistor 7 is prepared in advance. More specifically, carbon black and ceramic particles are kneaded with a specific amount of binder by the mediation of water. The thus-obtained slurry is dried and mixed with a glass powder containing the aforementioned B₂O₃, Li₂O, and the like under agitation, to thereby yield a target resistor composition.

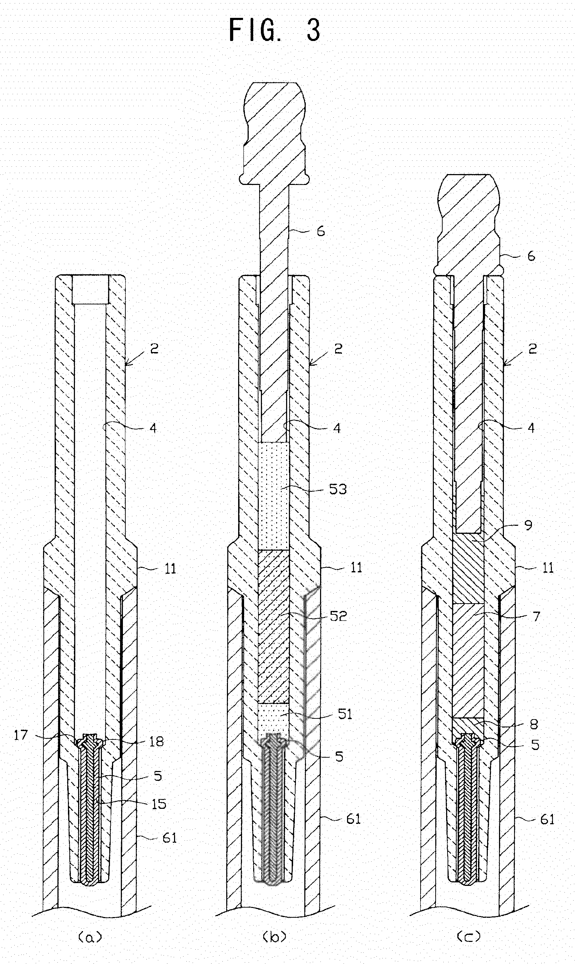

The thus-produced ceramic insulator 2, center electrode 5, resistor 7, and terminal electrode 6 are fixed by the mediation of glass seal layers 8, 9 through heating of glass material. More specifically, as shown in FIG. 3(a), the center electrode 5 is inserted into the small-diameter portion 15 of the axial hole 4, while the ceramic insulator 2 is supported by the front end surface of a supporting cylinder 61 made of metal. In this case, the bulge portion 18 of the center electrode 5 is seated on the tapered step portion 17 of the axial hole 4.

Then, as shown in FIG. 3(b), the axial hole 4 is filled with a conductive glass powder 51 which is generally prepared by mixing borosilicate glass with metallic powder, and the thus-added conductive glass powder 51 is preliminarily compressed. Then, the aforementioned resistor composition 52 is put into the axial hole 4, and the same preliminary compressing is performed. Subsequently, the conductive glass powder 53 is put into the axial hole 4, and the same preliminary compressing is performed. While the terminal electrode 6 is pressed, on the opposite side of the center electrode 5, against the axial hole 4, the assembly is heated in a firing furnace at a target temperature equal to or higher than the glass softening temperature (e.g., 900°C).

In the present embodiment, the resistor composition 52 and other members are compressed by the terminal electrode 6 in the ceramic insulator 2. Such ceramic insulators are transferred one by one to a firing furnace by conveying means (not illustrated) and heated for a predetermined period of time. After heating, these ceramic insulators are transferred one by one from the furnace to the outside through the conveying means. Thus, as compared with the case where a plurality of ceramic insulators 2 are heated in a firing furnace while they are arranged in a case at high density, and the insulators 2 placed in the case are removed from the furnace after heating, the ceramic insulator 2 and the resistor composition 52 placed in the insulator are rapidly heated and rapidly quenched. Therefore, the actual heating temperature tends to vary from the target temperature (for example, about ±30°C from the target temperature).

As shown in FIG. 3(c), when the resistor composition 52 and conductive glass powders 51 in a stacked state, 53 are heated and compressed, the resistor 7 and the glass seal layers 8, 9 are formed. By means of the glass seal layers 8, 9, the center electrode 5, terminal electrode 6, and resistor 7 are fixed to the ceramic insulator 2. In the course of heating in the firing furnace, a glaze layer may be formed on the rear trunk portion 10 of the ceramic insulator 2 layer. Alternatively, the glaze layer may be formed before firing.

Thereafter, the thus-fabricated ceramic insulator 2 having the center electrode 5, the resistor 7, etc. is fixed to the thus-fabricated metallic shell 3 having the ground electrode 31. More specifically, the relatively thin rear end opening portion of the metallic shell 3 is crimped radially inward; i.e., the above-mentioned crimp portion 24 is formed, whereby the ceramic insulator 2 is fixed to the metallic shell 3.

Finally, the ground electrode 31 is bent, and the spark discharge gap 33 provided between the noble-metal tip 32 and the ground electrode 31 is adjusted, whereby the aforementioned spark plug 1 is completed.

As described in detail above, according to the present embodiment, the resistor 7 has a B₂O₃ content of 17.8 mass% or higher. Thus, even when the heating temperature is slightly lower, glass can be sufficiently melted. As a result, a large number of paths are provided in the molten glass phase 42 so as to connect the center electrode 5 to the terminal electrode 6. That is, a large number of electrical conduction paths can be formed in the molten glass phase 42.

The B₂O₃ content is adjusted to 44.8 mass% or lower, the Li₂O content is adjusted to 6.3 mass% or lower, and the BaO content is adjusted to 19.9 mass% or lower. Thus, even when the heating temperature is shifted toward higher temperature, excessive melting of glass is prevented, whereby the density of the resistor 7 can be enhanced, and aggregation of carbon black is prevented. As a result, the oxidation of the resistor 7 is prevented, and a large number of electrical conduction paths can be formed in the molten glass phase, leading to enhancement in load life performance.

Regarding Li₂O and BaO, which are ingredients promoting melting of glass, the Li₂O content is adjusted to 1.2 mass% or higher, and the BaO content is adjusted to 3.5 mass% or higher. Thus, even when the heating temperature is shifted toward slightly lower temperature, glass can be sufficiently melted, to thereby form a large number of conduction paths in the molten glass phase 42.

In the present embodiment, the ratio by mass of the amount of Li₂O to that of BaO (Li₂O/BaO) is adjusted to 0.22 or higher. In other words, the Li₂O content is adjusted to a sufficiently high level, and Li₂O, which has a stronger phase separating action, serves as an effective ingredient. Therefore, the aggregate glass phase 41 can be finely dispersed in a wide temperature range and, furthermore, the molten glass phase 42 (electrical conduction paths) can be finely branched.

In addition, the ratio by mass of the amount of B₂O₃ to the total amount of Li₂O and BaO (B₂O₃/(Li₂O+BaO)) is adjusted to 1.43 or higher. Specifically, the amount of B₂O₃, which facilitates melting of glass, is sufficiently high with respect to the total amount of Li₂O and BaO. Therefore, even when the heating temperature is slightly shifted toward higher temperature, excessive melting of glass can be prevented, whereby prevention of a drop in density of the resistor 7 and the like can be further ensured.

As described above, according to the present embodiment, through adjusting the content of each substance to fall within the corresponding range, a large number of electrical conduction paths can be formed in a wide heating temperature range, and the density of the resistor 7 can be effectively increased. As a result, even when the resistor 7 has been formed through compacting with heating at a slightly varied temperature, the spark plug 1 produced therefrom attains excellent load life performance.

Next, in order to confirm the actions and effects exerted by the aforementioned embodiment, a plurality of spark plug samples were produced. In the production, the glass content by mass of the resistor was ere adjusted to 70%, 80%, or 90%; the B₂O₃ content, the Li₂O content, etc., and the ratio by mass of Li₂O to BaO, and the like were modified; and the heating temperature at which the resistor was formed was adjusted to 870°C, 900°C, or 930°C. Each sample was subjected to a load life performance test. The load life performance test was performed through the following general procedure. Specifically, each sample was set in a transistor ignition apparatus for automobiles, and electric discharge was caused to occur 3,600 times per minute at 350°C and a discharge voltage of 20 kV. The period of time until the sample exhibited a resistance of 100 kΩ or higher (lifetime) was measured. The tested samples were evaluated in term of load life performance on the basis of 10-grade ratings in accordance with the lifetime. When the lifetime was shorter than 150 hours, the rating was "1." When the lifetime was 150 hours or longer and shorter than 200 hours, the rating was "2." Similarly, as the lifetime was prolonged by an increment of 50 hours, the rating was upgraded by "1" (for example, a sample exhibiting a life time of 300 hours or longer and shorter than 350 hours was given a rating of "5"). When the lifetime was in excess of 550 hours, the sample was given a rating of "10." In the above test, the diameter of each sample was basically adjusted to 2.9 mm. However, when the glass content by mass of the resistor was 80%, the diameter of the sample was also adjusted to 3.5 mm, and such a sample was also tested. Table 1 shows the test results of the samples having a glass content by mass of the resistor of 70%. Table 2 shows the test results of the samples having a glass content by mass of the resistor of 80%. Table 3 shows the test results of the samples having a glass content by mass of the resistor of 90%. In each sample, the glass was formed of a glass, with the balance (other than B₂O₃ and other oxides) being SiO₂.

**[Table 1]**

| No. | Content (mass%) | | | | Ratio by mass | | Evaluation (score) | | |
|---|---|---|---|---|---|---|---|---|---|
| | B2O3 | Li2O | BaO | SiO2 | Li2O/BaO | B2O3/(Li2O+BaO) | Outer diam. of resistor: 2.9 mm | | |
| | | | | | | | 870°C | 900°C | 930°C |
| 1 | 7.2 | 3.1 | 16.0 | 43.8 | 0.19 | 0.38 | 1 | 2 | 6 |
| 2 | 45.0 | 1.5 | 7.8 | 15.7 | 0.20 | 4.83 | 2 | 2 | 2 |
| 3 | 26.9 | 0.6 | 14.8 | 27.8 | 0.04 | 1.75 | 2 | 1 | 1 |
| 4 | 29.7 | 6.7 | 8.6 | 25.0 | 0.78 | 1.94 | 1 | 1 | 1 |
| 5 | 36.1 | 5.2 | 1.8 | 27.0 | 2.96 | 5.20 | 1 | 1 | 1 |
| 6 | 18.3 | 1.3 | 26.8 | 23.6 | 0.05 | 0.65 | 2 | 1 | 1 |
| 7 | 23.3 | 2.3 | 11.8 | 32.6 | 0.20 | 1.65 | 5 | 5 | 5 |
| 8 | 23.7 | 2.7 | 15.3 | 28.3 | 0.17 | 1.32 | 8 | 8 | 5 |
| 9 | 20.9 | 2.1 | 15.3 | 31.7 | 0.14 | 1.20 | 8 | 8 | 5 |
| 10 | 23.9 | 1.1 | 24.4 | 20.7 | 0.04 | 0.94 | 8 | 5 | 5 |
| 11 | 20.3 | 2.8 | 11.9 | 35.0 | 0.24 | 1.38 | 5 | 5 | 4 |
| 12 | 17.8 | 1.9 | 8.8 | 41.6 | 0.22 | 1.67 | 7 | 7 | 7 |
| 13 | 17.8 | 2.0 | 9.3 | 40.9 | 0.22 | 1.57 | 7 | 7 | 7 |
| 14 | 28.9 | 1.2 | 5.4 | 34.5 | 0.22 | 4.39 | 7 | 8 | 8 |
| 15 | 24.9 | 3.4 | 14.1 | 27.7 | 0.24 | 1.43 | 9 | 9 | 9 |
| 16 | 27.4 | 3.6 | 15.5 | 23.5 | 0.24 | 1.43 | 7 | 8 | 8 |
| 17 | 22.2 | 2.0 | 8.2 | 37.7 | 0.24 | 2.19 | 8 | 7 | 7 |
| 18 | 27.4 | 3.6 | 14.6 | 24.4 | 0.25 | 1.50 | 10 | 10 | 10 |
| 19 | 28.9 | 2.0 | 5.4 | 33.7 | 0.36 | 3.93 | 8 | 8 | 9 |
| 20 | 34.9 | 2.7 | 11.0 | 21.4 | 0.25 | 2.54 | 10 | 10 | 10 |
| 21 | 30.5 | 4.9 | 8.4 | 26.3 | 0.58 | 2.29 | 10 | 10 | 10 |
| 22 | 23.8 | 3.7 | 3.5 | 39.0 | 1.06 | 3.30 | 10 | 10 | 10 |
| 23 | 23.7 | 2.7 | 10.4 | 33.2 | 0.26 | 1.81 | 10 | 10 | 10 |
| 24 | 24.2 | 3.0 | 9.0 | 33.7 | 0.33 | 2.01 | 10 | 10 | 10 |
| 25 | 24.6 | 3.4 | 7.5 | 34.4 | 0.46 | 2.26 | 10 | 10 | 10 |
| 26 | 26.3 | 3.2 | 8.3 | 32.3 | 0.39 | 2.29 | 10 | 10 | 10 |
| 27 | 20.4 | 3.2 | 8.3 | 38.0 | 0.39 | 1.77 | 10 | 10 | 10 |
| 28 | 22.0 | 3.2 | 11.3 | 33.5 | 0.28 | 1.52 | 10 | 10 | 10 |
| 29 | 26.6 | 4.3 | 8.3 | 30.8 | 0.51 | 2.11 | 10 | 10 | 10 |
| 30 | 27.7 | 2.5 | 9.7 | 30.1 | 0.26 | 2.28 | 10 | 10 | 10 |

**[Table 2]**

| No. | Content (mass%) | | | | Ratio by mass | | Evaluation (score) | | | | | |
|---|---|---|---|---|---|---|---|---|---|---|---|---|
| | B2O3 | Li2O | BaO | SiO2 | Li2O/BaO | B2O3/ (Li2O+BaO) | Outer diam. of resistor: 2.9 mm | | | Outer diam. of resistor: 3.5 mm | | |
| | | | | | | | 870°C | 900°C | 930°C | 870°C | 900°C | 930°C |
| 31 | 8.2 | 3.5 | 18.2 | 50.0 | 0.19 | 0.38 | 1 | 2 | 1 6 | 3 | 5 | 7 |
| 32 | 51.4 | 1.8 | 8.9 | 17.9 | 0.20 | 4.83 | 2 | 2 | 2 | 4 | 3 | 3 |
| 33 | 30.7 | 0.6 | 16.9 | 31.8 | 0.04 | 1.75 | 2 | 1 | 1 | 4 | 2 | 2 |
| 34 | 33.9 | 7.7 | 9.8 | 28.6 | 0.78 | 1.94 | 1 | 1 | 1 | 3 | 3 | 3 |
| 35 | 41.2 | 5.9 | 2.0 | 30.9 | 2.96 | 5.20 | 1 | 1 | 1 | 3 | 3 | 3 |
| 36 | 20.9 | 1.5 | 30.6 | 27.0 | 0.05 | 0.65 | 2 | 1 | 1 | 4 | 3 | 3 |
| 37 | 26.6 | 2.6 | 13.5 | 37.2 | 0.20 | 1.65 | 5 | 5 | 5 | 6 | 6 | 6 |
| 38 | 27.1 | 3.0 | 17.5 | 32.3 | 0.17 | 1.32 | 8 | 8 | 5 | - | - | - |
| 39 | 23.8 | 2.4 | 17.5 | 36.2 | 0.14 | 1.20 | 8 | 8 | 5 | - | - | - |
| 40 | 27.4 | 1.2 | 27.8 | 23.6 | 0.04 | 0.94 | 8 | 5 | 5 | - | - | - |
| 41 | 23.2 | 3.2 | 13.6 | 40.0 | 0.24 | 1.38 | 5 | 5 | 4 | 6 | 6 | 5 |
| 42 | 20.3 | 2.2 | 10.0 | 47.5 | 0.22 | 1.67 | 7 | 7 | 7 | - | - | - |
| 43 | 20.3 | 2.3 | 10.6 | 46.7 | 0.22 | 1.57 | 7 | 7 | 7 | - | - | - |
| 44 | 33.0 | 1.4 | 6.2 | 39.4 | 0.22 | 4.39 | 7 | 7 | 8 | - | - | - |
| 45 | 28.5 | 3.8 | 16.1 | 31.6 | 0.24 | 1.43 | 9 | 8 | 7 | - | - | - |
| 46 | 31.3 | 4.2 | 17.7 | 26.9 | 0.24 | 1.43 | 7 | 7 | 7 | - | - | - |
| 47 | 25.4 | 2.2 | 9.4 | 43.0 | 0.24 | 2.19 | 8 | 7 | 7 | - | - | - |
| 48 | 31.3 | 4.2 | 16.7 | 27.8 | 0.25 | 1.50 | 8 | 8 | 9 | - | - | - |
| 49 | 33.0 | 2.2 | 6.2 | 38.6 | 0.36 | 3.93 | 8 | 8 | 8 | - | - | - |
| 50 | 39.8 | 3.1 | 12.6 | 24.5 | 0.25 | 2.54 | 10 | 10 | 10 | - | - | - |
| 51 | 34.8 | 5.6 | 9.6 | 30.0 | 0.58 | 2.29 | 10 | 10 | 10 | - | - | - |
| 52 | 27.2 | 4.2 | 4.0 | 44.6 | 1.06 | 3.30 | 10 | 10 | 10 | - | - | - |
| 53 | 27.1 | 3.0 | 11.9 | 37.9 | 0.26 | 1.81 | 10 | 10 | 10 | 10 | 10 | 10 |
| 54 | 27.7 | 3.4 | 10.3 | 38.6 | 0.33 | 2.01 | 10 | 10 | 10 | 10 | 10 | 10 |
| 55 | 28.2 | 3.9 | 8.6 | 39.4 | 0.46 | 2.26 | 10 | 10 | 10 | 10 | 10 | 10 |
| 56 | 30.0 | 3.7 | 9.4 | 36.9 | 0.39 | 2.29 | 10 | 10 | 10 | 10 | 10 | 10 |
| 57 | 23.4 | 3.7 | 9.5 | 43.4 | 0.39 | 1.77 | 10 | 10 | 10 | 10 | 10 | 10 |
| 58 | 25.1 | 3.6 | 13.0 | 38.3 | 0.28 | 1.52 | 10 | 10 | 10 | 10 | 10 | 10 |
| 59 | 30.4 | 4.9 | 9.5 | 35.2 | 0.51 | 2.11 | 10 | 10 | 10 | 10 | 10 | 10 |
| 60 | 31.7 | 2.9 | 11.0 | 34.4 | 0.26 | 2.28 | 10 | 10 | 10 | 10 | 10 | 10 |

**[Table 3]**

| No. | Content (mass%) | | | | Ratio by mass | | Evaluation (score) | | |
|---|---|---|---|---|---|---|---|---|---|
| | B2O3 | Li2O | BaO | SiO2 | Li2O/ BaO | B2O3/ (Li2O+BaO) | Outer diam. of resistor: 2.9 mm | | |
| | | | | | | | 870°C | 900°C | 930°C |
| 61 | 9.3 | 4.0 | 20.5 | 56.3 | 0.19 | 0.38 | 1 | 2 | 6 |
| 62 | 57.9 | 2.0 | 10.0 | 20.2 | 0.20 | 4.83 | 2 | 2 | 2 |
| 63 | 34.6 | 0.7 | 19.0 | 35.7 | 0.04 | 1.75 | 2 | 1 | 1 |
| 64 | 38.2 | 8.6 | 11.1 | 32.1 | 0.78 | 1.94 | 1 | 1 | 1 |
| 65 | 46.4 | 6.7 | 2.3 | 34.7 | 2.96 | 5.20 | 1 | 1 | 1 |
| 66 | 23.5 | 1.7 | 34.5 | 30.3 | 0.05 | 0.65 | 2 | 1 | 1 |
| 67 | 30.0 | 3.0 | 15.2 | 41.9 | 0.20 | 1.65 | 5 | 5 | 5 |
| 68 | 30.5 | 3.4 | 19.7 | 36.4 | 0.17 | 1.32 | 8 | 8 | 5 |
| 69 | 26.8 | 2.7 | 19.7 | 40.8 | 0.14 | 1.20 | 8 | 8 | 5 |
| 70 | 30.8 | 1.4 | 31.3 | 26.6 | 0.04 | 0.94 | 8 | 5 | 5 |
| 71 | 26.1 | 3.6 | 15.3 | 45.0 | 0.24 | 1.38 | 5 | 5 | 4 |
| 72 | 22.9 | 2.4 | 11.3 | 53.5 | 0.22 | 1.67 | 7 | 7 | 7 |
| 73 | 22.9 | 2.6 | 12.0 | 52.6 | 0.22 | 1.57 | 9 | 9 | 9 |
| 74 | 37.2 | 1.5 | 6.9 | 44.4 | 0.22 | 4.39 | 7 | 8 | 8 |
| 75 | 32.0 | 4.3 | 18.1 | 35.6 | 0.24 | 1.43 | 8 | 8 | 7 |
| 76 | 35.2 | 4.7 | 19.9 | 30.2 | 0.24 | 1.43 | 7 | 7 | 7 |
| 77 | 28.5 | 2.5 | 10.5 | 48.4 | 0.24 | 2.19 | 9 | 9 | 10 |
| 78 | 35.2 | 4.7 | 18.8 | 31.3 | 0.25 | 1.50 | 8 | 8 | 9 |
| 79 | 37.2 | 2.5 | 6.9 | 43.4 | 0.36 | 3.93 | 8 | 8 | 8 |
| 80 | 44.8 | 3.5 | 14.1 | 27.5 | 0.25 | 2.54 | 10 | 10 | 10 |
| 81 | 39.2 | 6.3 | 10.8 | 33.8 | 0.58 | 2.29 | 10 | 10 | 10 |
| 82 | 30.6 | 4.8 | 4.5 | 50.1 | 1.06 | 3.30 | 10 | 10 | 10 |
| 83 | 30.5 | 3.4 | 13.4 | 42.7 | 0.26 | 1.81 | 10 | 10 | 10 |
| 84 | 31.1 | 3.9 | 11.6 | 43.4 | 0.33 | 2.01 | 10 | 10 | 10 |
| 85 | 31.7 | 4.4 | 9.6 | 44.3 | 0.46 | 2.26 | 10 | 10 | 10 |
| 86 | 33.8 | 4.1 | 10.6 | 41.5 | 0.39 | 2.29 | 10 | 10 | 10 |
| 87 | 26.3 | 4.1 | 10.7 | 48.9 | 0.39 | 1.77 | 10 | 10 | 10 |
| 88 | 28.3 | 4.1 | 14.6 | 43.1 | 0.28 | 1.52 | 10 | 10 | 10 |
| 89 | 34.2 | 5.5 | 10.7 | 39.6 | 0.51 | 2.11 | 10 | 10 | 10 |
| 90 | 35.6 | 3.2 | 12.4 | 38.7 | 0.26 | 2.28 | 10 | 10 | 10 |

As is clear from Tables 1 to 3, samples (samples 1, 31, and 61) having a low B₂O₃ content (lower than 17.8 mass%) exhibited large variation in load life performance, depending on the heating temperature. One possible reason for the variation is as follows. Melting of glass is insufficient due to slightly lower heating temperature, and formation of finely branching electrical conduction paths in the resistor is impeded. As a result, heat generation is localized during passage of electricity.

Samples (samples 2, 32, and 62) having high B₂O₃ content (higher than 44.8 mass%) as well as samples (samples 3 to 6, 33 to 36, and 63 to 66) having a high or low BaO content or Li₂O content exhibited impaired load life performance. One possible reason for this is as follows. By increasing the B₂O₃ content, the BaO content, or the amounts of other oxides, melting of glass is facilitated. After pressing, the density of the resistor is not sufficient, or aggregation of carbon black occurs due to lowered viscosity of glass, whereby the heat generation of the resistor is excessively increased. In the case where the samples have a low B₂O₃ content, BaO content, or small amounts of other oxides, melting of glass is impeded, and the resistor is produced without separating the molten glass phase, or branching electrical conduction paths.

Samples (samples 7 to 10, 37 to 40, and 67 to 50) having a ratio by mass of Li₂O to BaO (Li₂O/BaO) of lower than 0.22 exhibited variation in load life performance, and the load life performance was impaired at a certain heating temperature. One possible reason for this is as follows. Since the Li₂O content was equal to or lower than the BaO content, BaO, which less promotes phase separation as compared with Li₂O, predominantly acted, whereby finely separating the aggregate glass phase or finely branching the molten glass phase (electrical conduction paths) was impeded.

Samples (samples 11, 41, and 71) having a ratio by mass of the amount of B₂O₃ to the total amount of Li₂O and BaO (B₂O₃/(Li₂O+BaO)) of lower than 1.43 exhibited impaired load life performance. One possible reason for this is as follows. The B₂O₃ content is relatively small in comparison to the amounts of Li₂O and BaO, which facilitate melting of glass, whereby melting of glass readily occurred, resulting in a drop in density of the resistor or other disadvantages.

In contrast, samples (samples 12 to 30, 42 to 60, and 72 to 90) having a B₂O₃ content of 17.8 mass% to 44.8 mass%, an Li₂O content of 1.2 mass% to 6.3 mass%, a BaO content of 3.5 mass% to 19.9 mass%, a B₂O₃/(Li₂O+BaO) mass ratio of 1.43 or higher, and an Li₂O/BaO mass ratio of 0.22 or higher were evaluated as rating "7" or higher, even when the heating temperature varied. The resistor exhibited excellent load life performance after formation thereof by heating.

In particular, samples (samples 18 to 30, 48 to 60, and 78 to 90) having an Li₂O/BaO mass ratio of 0.25 or higher were found to have a resistor exhibiting remarkably excellent load life performance after formation of the resistor, even when the heating temperature varied. One possible reason for this is that phase separation of glass is further promoted, whereby the molten glass phase (electrical conduction paths) is more finely branched.

Samples (samples 20 to 30, 50 to 60, and 80 to 90) having a B₂O₃ content of 20.4 mass% to 44.8 mass%, an Li₂O content of 2.5 mass% to 6.3 mass%, and a BaO content of 3.5 mass% to 14.6 mass% were found to exhibit further excellent load life performance.

The test has revealed that, in order to attain excellent load life performance even when the heating temperature slightly varies, the resistor preferably has a B₂O₃ content of 17.8 mass% to 44.8 mass%, an Li₂O content of 1.2 mass% to 6.3 mass%, and a BaO content of 3.5 mass% to 19.9 mass%, and a B₂O₃/(Li₂O+BaO) mass ratio of 1.43 or higher and an Li₂O/BaO mass ratio of 0.22 or higher.

From the viewpoint of further enhancement of load life performance, the resistor more preferably has a B₂O₃ content of 20.4 mass% to 44.8 mass%, an Li₂O content of 2.5 mass% to 6.3 mass%, and a BaO content of 3.5 mass% to 14.6 mass%, or has an Li₂O/BaO mass ratio of 0.25 or higher.

As shown in Table 2 (samples 37, 41, etc.), the smaller the diameter of the resistor, the lower the load life performance. However, through adjusting the B₂O₃ content, the Li₂O/BaO mass ratio, and other factors to fall within the aforementioned ranges, excellent load life performance can be attained even when the resistor has a small diameter. In other words, the above configuration is particularly advantageous for a resistor having a diameter as small as 2.9 mm or less.

The present invention is not limited to the above-described embodiment, and the following alternative embodiments may be included. Needless to say, other modifications and variations which are not described below may also be included in the scope of the present invention.

(a) In the above embodiment, the resistor 7 has a diameter of 2.9 mm or less. The spark plug to which the technical concept of the present invention may be applied is not limited thereto. Thus, the technical concept of the present invention may be applied to a spark plug including a resistor 7 having a diameter in excess of 2.9 mm. In such an embodiment, variation in load life performance due to variation in heating temperature can be prevented, and excellent load life performance can be attained at a heating temperature falling within a wide range.

(b) In the above embodiment, the front end portion of the center electrode 5 is provided with the noble-metal tip 32. However, the front end portion of the ground electrode 31 may be provided with a noble-metal tip such that the tip opposes the noble-metal tip 32. Alternatively, either the noble-metal tip 32 on the center electrode 5 side or the noble-metal tip on the ground electrode 31 side may be omitted, or both noble-metal tips may be omitted.

(c) In the above embodiment, ZrO₂ particles and TiO₂ particles are employed as ceramic particles. However, other ceramic particles may also be employed. For example, aluminum oxide (Al₂O₃) particles may be employed.

(d) In the above embodiment, a specific feature of joining the ground electrode 31 to the front end of the metallic shell 3 is described. However, alternatively, a portion of the metallic shell (or a portion of a tip metallic member bonded in advance through welding to the metallic shell) may be ground to form a ground electrode (see, for example, Japanese Patent Application Laid-Open (*kokai*) No. 2006-236906).

(e) In the above embodiment, the tool engagement portion 23 has a hexagonal cross-section. However, no particular limitation is imposed on the cross-section of the tool engagement portion 25. For example, a Bi-HEX (deformed dodecagon) shape [ISO22977: 2005(E)] may be employed.

### DESCRIPTION OF REFERENCE NUMERALS

1 ··· spark plug; 2 ··· insulator (ceramic insulator); 4 ··· axial hole; 5 ··· center electrode; 6 ··· terminal electrode; 7 ··· resistor; CL1 ··· axis

## Claims

1. A spark plug comprising:
an insulator having an axial hole extending therethrough along an axis direction;
a center electrode inserted into a front end portion of the axial hole;
a terminal electrode inserted into a rear end portion of the axial hole;
a resistor disposed in the axial hole to be located between the center electrode and the terminal electrode and containing at least an electrically conductive material and glass;
**characterized in that** the resistor contains silicon dioxide in an amount of 15.0 mass% or more, boron oxide in an amount of 17.8 mass% to 44.8 mass%, lithium oxide in an amount of 1.2 mass% to 6.3 mass%, and barium oxide in an amount of 3.5 mass% to 19.9 mass%; and has a ratio by mass of the amount of boron oxide to the total amount of lithium oxide and barium oxide of 1.43 or higher, and a ratio by mass of the amount of lithium oxide to that of barium oxide of 0.22 or higher.

2. A spark plug according to claim 1, wherein the resistor contains boron oxide in an amount of 20.4 mass% to 44.8 mass%, lithium oxide in an amount of 2.5 mass% to 6.3 mass%, and barium oxide in an amount of 3.5 mass% to 14.6 mass%.

3. A spark plug according to claim 1 or 2, wherein the ratio by mass of the amount of lithium oxide to that of barium oxide is adjusted to 0.25 or higher.

4. A spark plug according to any one of claims 1 to 3, wherein the resistor has a diameter of 2.9 mm or less.

5. A spark plug according to any one of claims 1 to 4, wherein the resistor has a glass content by mass of 70 mass% or higher.

## Amended claims

### Amended claims under Art. 19.1 PCT

1. (Amended) A spark plug comprising:
an insulator having an axial hole extending therethrough along an axis direction;
a center electrode inserted into a front end portion of the axial hole;
a terminal electrode inserted into a rear end portion of the axial hole;
a resistor disposed in the axial hole between the center electrode and the terminal electrode and containing at least an electrically conductive material and glass;
**characterized in that** the resistor contains silicon dioxide in an amount of 15.0 mass% or more, boron oxide in an amount of 20.4 mass% to 44.8 mass%, lithium oxide in an amount of 2.5 mass% to 6.3 mass%, and barium oxide in an amount of 3.5 mass% to 14.6 mass%; and has a ratio by mass of the amount of boron oxide to the total amount of lithium oxide and barium oxide of 1.43 or higher, and a ratio by mass of the amount of lithium oxide to that of barium oxide of 0.22 or higher.

2. (Deleted)

3. (Amended) A spark plug according to claim 1, wherein the ratio by mass of the amount of lithium oxide to that of barium oxide is adjusted to 0.25 or higher.

4. A spark plug according to any one of claims 1 to 3, wherein the resistor has a diameter of 2.9 mm or less.

5. A spark plug according to any one of claims 1 to 4, wherein the resistor has a glass content by mass of 70 mass% or higher.
